# EUROPÄISCHE PATENTSCHRIFT

(11) **EP 2 295 218 B1**
(45) Veröffentlichungstag und Bekanntmachung des Hinweises auf die Patenterteilung: **19.12.2012**
(21) Anmeldenummer: 10006166.2
(22) Anmeldetag: 13.11.2007
(51) Int. Cl.: B29B 17/00

(54) **Verfahren zur Aufarbeitung von Polymilchsäure-Kunststoffen**
Method for the recycling of polylactic acid plastics
Procédé de recyclage de résine d'acide polylactique

(30) Priorität: 13.11.2006 AT 18802006
(43) Veröffentlichungstag der Anmeldung: 16.03.2011
(62) Teilanmeldung aus: 07815182.6
(73) Patentinhaber: EREMA Engineering Recycling Maschinen und Anlagen Gesellschaft m.b.H., 4052 Ansfelden (AT)
(72) Erfinder: Wendelin, Gerhard, Mag., 4030 Linz (AT); Feichtinger, Klaus, Dipl.-Ing., 4040 Linz (AT); Hackl, Manfred, Dipl.-Ing., 4040 Linz-Urfahr (AT)
(74) Vertreter: Wildhack, Andreas

(56) Entgegenhaltungen:
- EP-A- 1 555 209
- EP-A2- 0 698 462
- WO-A-00/74912
- WO-A-01/21372
- WO-A-89/07042
- WO-A-02/100624
- AT-B- 411 235
- DE-A1- 19 517 185
- JP-A- 63 189 222
- JP-A- 2005 330 211

## Beschreibung

Die Erfindung bezieht sich auf ein Verfahren zur Vorbehandlung, Aufarbeitung bzw. Recyclierung von thermoplastischem Kunststoffmaterial aus Polymilchsäure gemäß dem Oberbegriff des Anspruchs 1.

Die Aufarbeitung von Kunststoffabfällen ist in der heutigen Zeit ein zunehmend wichtiges Problem geworden. Allerdings gehen mit einer effizienten Recyclierung vielfältige Probleme einher, die beachtet werden müssen. So liegen beispielsweise die zu behandelnden Kunststoffe üblicherweise als Abfälle in unterschiedlichster Form, Gestalt, Dicke etc. vor. Außerdem haben die einzelnen Kunststoffe untereinander unterschiedliche chemische und physikalische Eigenschaften. Auch sind die meisten zur recyclierenden Kunststoffe mit Giftstoffen oder anderen Kontaminantien verschmutzt und bedürfen einer Reinigung, um wieder verkehrsfähig zu werden.

Es existiert eine Vielzahl von verschiedenen Verfahren, um Kunststoffe wiederzugewinnen und zu recyceln. Allerdings sind bei diesen Verfahren immer nur einzelne Aspekte berücksichtigt, sodass die aus dem Stand der Technik bekannten Verfahren zwar für spezielle Einsatzzwecke geeignet sind, dafür aber auf anderen Gebieten und bei anderen Anforderungen und Problemen versagen.

So ist es beispielsweise bei der Recyclierung von, insbesondere hygroskopischen, Kunststoffen von Bedeutung, dass das zu recyclierende Gut möglichst trocken ist, um einen hydrolytischen Abbau der Molekülketten bei der Plastifizierung bzw. beim Aufschmelzen zu verhindern. Dies muss unter anderem bei der Verfahrensführung berücksichtigt werden.

Auch verfahrenstechnologische Probleme, wie beispielsweise das Verkleben mancher Kunststoffe bei höheren Temperaturen, müssen beachtet werden.

Auch hat die zunehmende Wiederverwertung recycelter Kunststoffe dazu geführt, Recyclingware auch auf dem Gebiet der Lebensmittelverpackungen einzusetzen. Wo jedoch ein direkter Kontakt des recycelten Kunststoffes mit dem Lebensmittel gegeben ist, muss gewährleistet sein, dass keine unerwünschten Kontaminationen aus dem Verpackungsmittel, das aus dem recycelten Kunststoff hergestellt wurde, in das Lebensmittel gelangen. Zur Lösung dieses Problems sind bereits zahlreiche Verfahren entwickelt worden, um gebrauchte und daher verschmutzte und häufig mit im Bezug auf Lebensmittel toxischen Verunreinigungen versehene Kunststoffware so zu recyceln, dass das erhaltene recycelte Kunststoffgut wieder auf dem Gebiet der Lebensmittelverpackung problemfrei eingesetzt werden kann.

Hier sind zunächst diverse chemische Verfahren bekannt. Demgegenüber arbeiten physikalische Verfahren mit wesentlich niedrigeren Temperaturen, sodass die Struktur, und insbesondere die Molekülkettenlänge, des recycelten Kunststoffes im Wesentlichen erhalten bleibt.

Ein zunehmend wichtiger Kunststoff ist Polymilchsäure bzw. Polylactid, im weiteren PLA genannt. Polymilchsäure bzw. PLA ist ein thermoplastischer Kunststoff mit der Formel

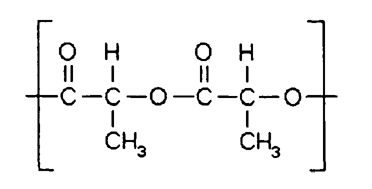

PLA [26100-51-6] gehört zur Familie der Polyester. Die optisch aktiven Polymere treten in der Form von D- oder L-Lactiden auf.

Sein größtes Anwendungsgebiet findet PLA in der Verpackungsindustrie. Eine positive Eigenschaft dieses Stoffes ist, dass er eine sehr gute Biodegradabilität aufweist, biokompatibel und umweltverträglich ist, und somit leicht von Mikroorganismen abgebaut werden kann.

Ebenfalls interessant ist die medizinische Anwendung von PLA. So werden aus PLA Implantate oder Wirkstoffträger hergestellt, die im menschlichen Körper abgebaut werden. Eine Knochenplatte und/oder eine Schraube aus PLA wird im Körper mit fortschreitender Heilung z.B. eines Knochenbruchs abgebaut, muss also nicht mehr in einer Zweitoperation entfernt werden. Die Resorptionsdauer kann durch das Mischungsverhältnis aus L- und D-Anteilen sowie der Kettenlänge des eingesetzten Polymers eingestellt werden. Geschäumte Körper aus PLA mit eingelagerten Wirkstoffen können diese lokal in einer definierten Zeit frei setzen.

Die Eigenschaften von PLA hängen vor allem von der Molekülmasse, dem Kristallinitätsgrad und gegebenenfalls dem Anteil von Copolymeren ab. Eine höhere Molekülmasse steigert die Glasübergangs- sowie die Schmelztemperatur, die Zugfestigkeit sowie den E-Modul und senkt die Bruchdehnung. Aufgrund der Methylgruppe verhält sich das Material wasserabweisend bzw. hydrophob. PLA ist in vielen organischen Lösungsmitteln löslich z.B. in Dichlormethan od. dgl.. Zur Verarbeitung kann PLA auch faserverstärkt werden.

PLA-Polymere sind vor allem durch die ionische Polymerisation von Lactid, einem ringförmigen Zusammenschluss von zwei Milchsäuremolekülen, zugänglich. Bei Temperaturen zwischen 140° und 180°C sowie der Einwirkung katalytischer Zinnverbindungen (z.B. Zinnoxid) findet eine Ringöffnungspolymerisation statt. So werden Kunststoffe mit einer hohen Molekülmasse und Festigkeit erzeugt. Lactid selbst lässt sich durch Vergärung von Melasse oder durch Fermentation von Glukose mit Hilfe verschiedener Bakterien herstellen. Auch kann hochmolekulare und reine PLA durch Polykondensation direkt aus Milchsäure erzeugt werden. In der industriellen Produktion ist allerdings die Entsorgung des Lösungsmittels problematisch.

Der Glasübergangspunkt bzw. -bereich von PLA liegt zwischen 55° und 58° C, die Kristallisationstemperatur zwischen 100° und 120° C und die Schmelztemperatur zwischen 165° und 183° C.

Bei der Recyclierung von PLA-Kunststoffen ist es von Bedeutung, dass das zu recyclierende Gut möglichst trocken ist, um einen hydrolytischen Abbau der Molekülketten bei der Plastifizierung bzw. beim Aufschmelzen zu verhindern. PLA ist jedoch hygroskopisch, wodurch eine effiziente Trocknung erschwert wird.

Der niedrige Glasübergangspunkt, bei dem das PLA-Material zu höheren Temperaturen hin klebrig wird, und eine relativ lange Kristallisationszeit machen es schwierig, amorphe Produktionsabfälle, insbesondere Reste von Tiefziehfolien, mit konventionellen Kristallisationssystemen und Trocknungssystemen zu kristallisieren bzw. zu trocknen.

Derartige konventionelle, aus dem Stand der Technik bekannte, Trocknungssysteme sind z.B. Trockenlufttrockner, die bei einem Luftstrom von ca. 1,85 m³/h und kg Granulat trocknen. Dabei wird beispielsweise nichtkristallisiertes PLA bei 45°C, für ca. 4 h, bei einem Taupunkt -40°C und kristallisiertes PLA bei 90°C, für ca. 2 h, bei einem Taupunkt -40°C getrocknet.

Durch die niederen Trocknungstemperaturen, im speziellen bei der Verarbeitung von nicht kristallisiertem Material ergibt sich jedoch eine relativ lange Trocknungszeit und eine äußerst präzise Temperaturführung ist nötig. Dies ist für Granulate und insbesondere für alle anderen Formen, wie z.B. für Flakes, Folien, Vliese etc. äußerst schwierig, wenn nicht unmöglich.

Aus diesem Grund kann versucht werden, vor einer Trocknung eine Kristallisation des Kunststoffguts zu erreichen. Eine derartige Kristallisation kann beispielsweise dadurch erreicht werden, dass die Teilchen gleichmäßig bei einer Temperatur niedriger als die Trocknungstemperatur, auf jeden Fall bei einer Temperatur niedriger als die Schmelz- bzw. Plastifizierungstemperatur, bewegt bzw. mechanisch beaufschlagt werden. Die Bewegung ist vorteilhaft, um ein Zusammenkleben der einzelnen Teilchen zu vermeiden.

Da jedoch die zur Recyclierung vorgesehenen Materialien zumeist verunreinigt sind und einer Waschung und allenfalls einer vorab erfolgenden Zerkleinerung mit gleichzeitiger Verschmutzung unterworfen werden, erfolgt vorab zumeist eine definierte Zerkleinerung bzw. ein Mahlen, ein Waschen und ein Trocknen. Eine derartige Vortrocknung sollte zumindest den Wassergehalt auf einen Wert von kleiner als 1,5 Gew.-% des einzusetzenden bzw. zu recyclierenden Kunststoff-Gutes nicht überschreiten.

Wird ein vorgezogener Kristallisationsschritt mit einem üblichen Kristallisierer vorweggenommen, ist das ebenfalls äußerst schwierig und Verklebungen sind an der Tagensordnung.

Erschwerend für die Durchführung eines Verfahrens zur Aufbereitung von Kunststoffen kommt die Tatsache hinzu, dass für die verschiedensten Einsatzzwecke ganz verschiedene Kunststoffe eingesetzt werden, die sich hinsichtlich ihrer chemischen und physikalischen Eigenschaften wesentlich voneinander unterscheiden. So hat beispielsweise PET ganz andere Eigenschaften als PE, oder PS hat andere Eigenschaften als PP.

Es ist somit nicht gut möglich, die Erkenntnisse, die bei der Aufarbeitung eines Polymermaterials gewonnen wurden, auf ein anderes Material zu übertragen bzw. direkt umzulegen. Jedes Polymer erfordert somit eine eigene spezielle Betrachtung und Auswertung und speziell auf das jeweilige Material abgestimmte Verfahrensbedingungen. Die genaue Verfahrensführung wird außerdem auch von der Form und insbesondere der Dicke des zu behandelnden Materials beeinflusst.

Da darüber hinaus auch die Parameter der Kristallisation, der Trocknung, der Reinigung und z.B. der Erhöhung der Viskosität ein komplexes Wechselspiel darstellen, das vorab nur schwer vorauszusagen ist und das keine allgemeingültigen Regeln zulässt, ist in jedem Einzelfall für jedes Polymer und für jede Form und Art der zu recyclierenden Abfälle eine spezielle Anpassung der Verfahrensparameter nötig.

*In der* JP 2005 330211 A *ist ein Verfahren zur Aufbereitung von Polymilchsäure-Kunststoffen beschrieben. Dieses bezieht sich allerdings auf eine Aufbereitung durch Hydrolyse bei hoher Temperatur.*

Aufgabe der vorliegenden Erfindung ist es somit, ein Verfahren zu schaffen, mit dem Abfälle aus Polymilchsäure (PLA) schonend, effizient und kostengünstig aufbereitet werden können.

Weiters soll es durch dieses Verfahren ermöglicht werden, empfindliche oder instabile, insbesondere hygroskopische, Kunststoffe aus Polymilchsäure oder PLA-Kunststoffe mit erhöhtem Feuchtegehalt schonend zu behandeln.

Außerdem ist es Aufgabe der Erfindung, ein Verfahren zu schaffen, mit dem zu recyclierende PLA-Kunststoffe getrocknet und gegebenenfalls in einem Schritt gleichzeitig kristallisiert werden können.

Weiters ist es Aufgabe der Erfindung, ein Verfahren vorzusehen, mit dem PLA-Kunststoffe einer raschen und möglichst energiesparenden Recyclierung unterzogen werden können, wobei die recyclierten, wiedergewonnen Kunststoffe bzw. das mit der sich ergebenden Schmelze hergestellte PLA-Granulat bzw. daraus hergestellte Gegenstände möglichst hohe Werte für die Viskosität aufweisen und insbesondere eine Viskosität aufweisen, die mit den Viskositätswerten des zu recyclierenden Gutes vergleichbar sind. Der Viskostitätswert des Regranulats soll erhöht werden.

Weiters ist es Aufgabe der Erfindung, ein Verfahren vorzusehen, mit dem stark verschmutzte bzw. kontaminierte bzw. stark bedruckte PLA-Kunststoffe aufbereitet werden können, ohne die mechanischen Eigenschaften des Kunststoffes und/oder dessen Schmelzeeigenschaften negativ zu beeinflussen. Die recyclierten, wiedergewonnen Kunststoffe bzw. die erzielte Kunststoffschmelze bzw. das aus der Schmelze hergestellte Granulat sollen lebensmittelecht sein, d.h. insbesondere den lebensmitteltechnischen Vorschriften genügen und die Tauglichkeit für den Einsatz für Lebensmittel erlangen bzw. gemäß dem europäischem ILSI-Dokument oder FDA zertifiziert sein. In dem zur Recyclierung aufgegebenen Material enthaltene Schadstoffe, Migrationsprodukte bzw. Kontaminierungen sollen durch das Verfahren somit möglichst weitgehend abgeschieden werden.

Diese Aufgaben werden durch die kennzeichnenden Merkmale des Anspruchs 1 gelöst.

Dabei ist erfindungsgemäß zunächst vorgesehen, dass das Kunststoffmaterial aus Polymilchsäure (PLA) auf eine Temperatur von 65° bis 120°C, vorzugsweise 90° bis 110°C, erwärmt wird. Wenn das Kunststoffmaterial in Form von dünnen Folien, Fasern oder Vliesen, insbesondere mit einer Dicke zwischen 100 µm bis 2 mm, vorliegt, ist weiters vorgesehen, dass es bei einer Umfangsgeschwindigkeit der äußersten Rührspitze des Misch- bzw. Zerkleinerungswerkzeugs von 15 bis 58 m/s, vorzugsweise 35 bis 47 m/s, gemischt wird und für eine mittlere Verweilzeit von 3 min bis 60 min, insbesondere von 10 min bis 25 min, im Reaktor verbleibt und unter Umgebungsdruck behandelt wird. Wenn das Kunststoffmaterial in Form von Flakes aus zerkleinerten Gebinden oder Granulaten vorliegt, ist vorgesehen, dass es bei einer Umfangsgeschwindigkeit der äußersten Rührspitze des Misch- bzw. Zerkleinerungswerkzeugs von 1 bis 35 m/s, vorzugsweise 3 bis 20 m/s, gemischt wird und für eine mittlere Verweilzeit von 10 min bis 100 min, insbesondere von 20 min bis 70 min, im Reaktor verbleibt und unter einem Vakuum von ≤ 150 mbar, vorzugsweise ≤ 50 mbar, insbesondere s 20 mbar, insbesondere zwischen 0,1 bis 2 mbar, behandelt wird.

Die Kristallisation, die Trocknung, die Reinigung bzw. Entgiftung, gegebenenfalls auch die Erhöhung der Viskosität erfolgen vorteilhafterweise gleichzeitig, insbesondere in einem einzigen gemeinsamen Verfahrensschritt. Die Aufbereitung findet somit schnell und dennoch schonend statt.

So kann beispielsweise sowohl kristallisiertes als auch unkristallisiertes PLA in jeglicher vorzerkleinerten bzw. rieselförmigen Form in beliebigen Mischungsverhältnissen in einem gemeinsamen Schritt getrocknet und, falls nötig, kristallisiert werden und, falls gewünscht, direkt einem Extruder zugeführt werden, in dem das Material aufgeschmolzen wird.

Für das erfindungsgemäße Verfahren ist die in Anspruch 1 beschriebene milde, aber stetige Bewegung des PLA -Materials vorteilhaft. Dadurch wird das Verklumpen bzw. Verkleben des Materials im kritischen Temperaturbereich verhindert, bis eine ausreichende Kristallisierung der Oberfläche der Teilchen das Zusammenkleben der einzelnen Teilchen selbst verhindert. Außerdem ist durch die Bewegung eine höhere Prozesstemperatur möglich. Im Behandlungsbehälter wird bei der milden und stetigen Bewegung neben dem Hinanhalten von Verklebungen gleichzeitig dafür gesorgt, dass die Temperatur im Behälter ausreichend hoch wird bzw. bleibt und jedes Teilchen schonend auf die entsprechende Temperatur erwärmt wird bzw. beibehält. Gleichzeitig wird durch die Bewegung eine Ablösung der migrierenden Moleküle von der Oberfläche der Teilchen unterstützt. Zu diesem Zwecke kommen vorteilhafterweise Werkzeuge auf unterschiedlichen Ebenen bei kontinuierlichen Prozessen bzw. Mischwerkzeuge bei Batch-Prozessen zum Einsatz.

Vorteilhafte Ausgestaltungen des Verfahrens werden u.a. durch die Merkmale der abhängigen Ansprüche erzielt:

Eine verbesserte Trocknung des PLA-Kunststoffmaterials wird beispielsweise durch Vakuumunterstützung erreicht. Ein auf diese Weise geführtes Verfahren benötigt durch den Einsatz von Vakuum auch einen deutlich geringeren Energieeinsatz als vergleichbare Systeme.

Das anliegende Vakuum unterstützt den Diffusionsprozess der Verschmutzungen aus dem Material und es sorgt auch für die Abführung derselbigen.

Weiters schützt das Vakuum die heißen Polymerteilchen bzw. Flakes vor oxidativen Einflüssen bzw. Schädigungen, wodurch auch eine höhere Viskosität im Vergleich zu anderen Anlagensystemen erreichbar ist. Grundsätzlich wäre die Entgiftung auch mit jedem inerten Gas möglich. Dies ist aber mit deutlich höheren Kosten verbunden.

Die Trocknung wird durch eine bestimmte vorteilhafte Mindestverweilzeit des Materials bei der eingestellten Temperatur und gegebenenfalls dem ausgewählten Vakuum unterstützt.

Eine aufwendige und kostenintensive herkömmliche externe Vortrocknung und Kristallisation des verarbeiteten Materials sowie der Einsatz von chemischen Additiven und/oder eine Solid State Kondensation sind nicht erforderlich.

Als aufzubereitende Eingangsware liegen vornehmlich Gebinde aus der Lebensmittelindustrie, wie z.B. Milchflaschen, Joghurtbecher, etc. vor. Diese Gebinde werden in einem ersten Schritt in vorgelagerten Sammel-, Sortier-, Zerkleinerungs- und Waschanlagen von den üblichen groben Verunreinigungen befreit. Es verbleiben jedoch geringste Verunreinigungen, die in die äußerste Schicht des Gebindes eindiffundiert sind.

Zu diesem Zweck werden die gewaschenen, getrockneten Flakes dem erfindungsgemäßen Reinigungsverfahren unter erhöhter Temperatur und gegebenenfalls Vakuum unterzogen, wobei auch für die Dekontaminierung die Verweilzeit im Reaktor unter den eingestellten Verfahrensbedingungen eine Rolle spielt. Die Verfahrensparameter richten sich nach der Inertheit und den chemischen und physikalischen Eigenschaften des entsprechenden Polymers.

Es ist nicht entscheidend, wie die Temperatur in das Material gebracht wird. Dies kann in einem vorgelagerten Prozess stattfinden oder im Behandlungsbehälter stattfinden. Vorteilhafterweise geschieht dies jedoch durch die sich drehenden Mischwerkzeuge selbst.

Da sich die Migrationsprodukte in der Randschicht der Polymerteilchen befinden, werden die Diffusionswege im Vergleich zu einem Extrusionsprozess mit anschließender Entgasung der Schmelze drastisch verkürzt.

Grundsätzlich kann das erfindungsgemäße Verfahren in einem Batch-Prozess oder kontinuierlich ablaufen. Es soll vorteilhafterweise nur sichergestellt werden, dass die verfahrenstechnischen Parameter, wie Temperatur, Verweilzeit und Vakuum über die gesamte Zeit eingehalten wird. Ein kontinuierlicher Prozess hat sich als besonders zweckmäßig erwiesen, um einen gleichmäßigen Produktionsablauf zu gewährleisten.

Weiters kann es von Vorteil sein, wenn das Material in einem vorgelagerten Prozess auf eine nahe der Prozesstemperatur entsprechenden Temperatur gebracht wird. Dies gilt speziell für Polymere mit geringer Inertheit und/oder langer Diffusionszeit.

Durch die Entfernung der Kontaminationen wird zudem auch die Geruchsbelästigung vermindert.

Die Verweilzeit stellt sicher, dass eine Mindestreinigung des Materials erfolgt und richtet sich nach unterschiedlichen Kriterien, nämlich der Diffusionsgeschwindigkeit der Migrationsprodukte im Polymer und der Erweichungs- bzw. Schmelztemperatur des Polymers.

Die Verweilzeit kann durchaus sehr lange werden. Um bei den Temperaturen, die im Reaktor vorherrschen, das Material nicht aufzuschmelzen, kann es zielführend sein, die Teilchen unmittelbar einem Extrusionsprozess mit Entgasung der Schmelze zuzuführen

Vorteilhaft ist es, wenn der Extruder direkt an den Behälter angekoppelt ist, wobei das Vakuum vorteilhafterweise bis in den Aufschmelzbereich hinein reicht und gleichzeitig soviel gespeicherte Energie in den Flakes wie möglich in den Extruder mitgenommen wird bzw. der nachfolgende Extruder unter Vakuum aufschmilzt.

Um zu vermeiden, dass es durch Transportschritte zwischen Behandlungsbehälter und Extruder zu Energieverlusten kommt, können Maßnahmen, wie z.B. Transporteinrichtungen, Isolationen, zusätzliches Vakuum im Aufschmelzbereich etc., getroffen werden.

In der Aufschmelzzone des Extruders und in der nachfolgenden Schmelzeentgasung werden die letzten flüchtigen Bestandteile bei höherer Temperatur unter Vakuum entfernt.

Abschließend kann die Schmelze je nach Notwendigkeit einer Filtration, einer Granulierung oder einem nachfolgenden Fertigungsschritt zur Fertigung eines Endprodukts oder Halbfertigprodukts zugeführt werden.

Das erfindungsgemäße Verfahren zur Vorbehandlung, Aufarbeitung bzw. Recyclierung von PLA-Kunststoffmaterial in all seinen vorteilhaften Ausgestaltungen wird üblicherweise in einem Aufnahmebehälter bzw. Reaktor durchgeführt. Das zu behandelnde Kunststoffmaterial wird in diesem Aufnahmebehälter bzw. Reaktor vorgelegt und unter ständiger Mischung bzw. Bewegung und/oder Zerkleinerung bei erhöhter Temperatur behandelt.

Zur Mischung und Erwärmung des Kunststoffmaterials ist im Reaktor zumindest ein, gegebenenfalls auf mehreren übereinanderliegenden Ebenen angeordnetes, um eine vertikale Achse drehbares Zerkleinerungs- bzw. Mischwerkzeug, mit auf das Gut zerkleinernd und/oder mischend einwirkenden Arbeitskanten, angeordnet. Durch diese Zerkleinerungs- bzw. Mischwerkzeuge wird das Polymermaterial mit mechanischer Energie beaufschlagt, wodurch eine Erwärmung und eine gleichzeitige Mischung und Bewegung des Polymer-Materials erfolgt. Die Erwärmung erfolgt dabei durch Umwandlung der beaufschlagten mechanischen Energie.

Derartige Reaktoren werden auch in der Praxis eingesetzt und sind beispielsweise als "EREMA Kunststoff Recycling System PC" oder als "ein- oder zweistufige VACUREMA-Anlagen" bekannt.

Die Aufarbeitung erfolgt bei einer Temperatur unterhalb der Schmelztemperatur und vorzugsweise über der Glasübergangstemperatur, des Kunststoffmaterials, wobei das Polymermaterial gleichmäßig und stetig bewegt und durchmischt wird. Dadurch wird das Kunststoffmaterial in einem Schritt kristallisiert, getrocknet und gereinigt.

Auch Mischungen von PLA mit anderen Kunststoffmaterialien, wie z.B. High Density Polyethylen (HDPE), Low Density Polyethylen (LDPE), Polypropylen (PP), Polycarbonat (PC), Polystyrol (PS), Polyethylennaphthalat (PEN), Polyamide (PA), Polylimid (PI), Polyhydroxyalkalinsäure (PHA), Styrol-Copolymere, wie beispielsweise Acrylnitril-Butadien-Styrol (ABS), Styrol-Acrylnitril (SAN), Polymethylmethacrylat (PMMA) und/oder Biokunststoffe, insbesondere auf Stärkebasis, bzw. Stärkeblends, können eingesetzt werden.

Das PLA-Kunststoffmaterial liegt üblicherweise in Form von zumindest teilweise kristallisiertem oder nicht kristallisiertem bzw. amorphem Granulat, als Neuware oder als Regenerat vor. Es kann aber auch in Form eher amorpher, zerkleinerter Folienabfälle, insbesondere aus Tiefziehapplikationen, mit einer Dicke von insbesondere zwischen 100 µm bis 2 mm, in Form von dünnen Folienabfällen aus Verstreckungsanlagen mit einer Dicke von insbesondere zwischen 5 µm - 100 µm und/oder in Form von Faser- und Vliesabfällen vorliegen. Außerdem kann das Kunststoffmaterial in Form von Flaschenabfällen oder Spritzgussabfällen vorliegen.

Das Verfahren wird für stückiges Polymergut, insbesondere in Form von Granulaten, Flakes od. dgl. vorzugsweise in einem einstufigen VACUREMA Reaktor durchgeführt. Ein derartiger Reaktor weist die oben angeführten Merkmale auf und kann mit Vakuum beaufschlagt werden.

Für Polymergut in Form von dünnen Folien, Faser oder Vliesen wird das Verfahren vorteilhafterweise in einem einstufigen EREMA PC Reaktor durchgeführt. Hierbei reicht es oft auch aus, wenn das Verfahren unter Umgebungsdruck, also ohne Vakuum, ausgeführt wird. Der Reaktor weist ebenfalls die oben angeführten Merkmale auf.

Das Verfahren kann auch zweistufig geführt werden. So kann beispielsweise eine Mischung aus kristallisierten und nichtkristallisierten Granulaten oder Flakes als zu reinigendes Material im Kristallisationstrockner eines zweistufigen VACUREMA Reaktors vorgelegt werden. Im vorgeschalteten Kristallisationstrockner sind um eine vertikale Achse rotierende Zerkleinerungs- bzw. Mischwerkzeuge angeordnet, die mit auf das Gut zerkleinernd und/oder mischend einwirkenden Arbeitskanten ausgestattet sind. Durch diese Zerkleinerungs- bzw. Mischwerkzeuge wird das Material mit mechanischer Energie beaufschlagt, wodurch eine Vorwärmung des Materials und eine gleichzeitige Mischung und Bewegung des Materials erfolgt. Anschließend wird das vorgewärmte, vorgetrocknete, vorkristallisierte Material der Hauptbehandlung unterzogen.

Um das erfindungsgemäße Verfahren in vorteilhafter Weise durchführen zu können, kann beispielsweise eine Vorrichtung eingesetzt werden, die einen Behälter für das zu bearbeitende Kunststoffgut aufweist, dem dieses Gut durch eine Einbringöffnung zugeführt und aus dem das Gut durch zumindest eine an die Seitenwand des Behälters angeschlossene Schnecke ausgebracht wird, wobei im Bodenbereich des Behälters zumindest ein um eine vertikale Achse drehbares, mit auf das Gut zerkleinernd und bzw. oder mischend einwirkenden Arbeitskanten versehenes, Werkzeug angeordnet ist und die Einzugsöffnung der Schnecke zumindest annähernd auf der Höhe des Werkzeuges liegt, und vorzugsweise mit zumindest einer an den Behälter angeschlossenen Leitung zur Erzeugung eines Vakuums und bzw. oder zur Begasung im Behälterinnenraum, versehen ist. Eine solche Vorrichtung ist beispielsweise als VACUREMA Reaktor oder als EREMA PC Reaktor verwirklicht.

Eine derartige Verfahrensführung ist im allgemeinen befriedigend, auch bei der Verarbeitung solcher Kunststoffsorten, die empfindlich auf Luftsauerstoff und/oder Feuchtigkeit sind, da durch Evakuierung des Behälters bzw. durch Einführung eines Schutzgases in das Behälterinnere das Kunststoffmaterial gegen diese schädlichen Einflüsse geschützt werden kann.

Es hat sich jedoch gezeigt, dass in manchen Fällen der Homogenisierungsgrad des über die Schnecke abgeführten Kunststoffmateriales nicht ausreichend ist, insbesondere in Bezug auf den erzielten Trocknungsgrad solcher Kunststoffmaterialien, die zur Vermeidung von Degradierung bereits vor der Plastifizierung völlig trocken sein müssen.

Folien größerer Stärke erfordern einen mit der Dicke zunehmenden gesteigerten Trockenaufwand, wodurch für derartiges Gut gesonderte Trockenvorgänge, z.B. mit dehydrierter Luft, in speziellen Trocknern notwendig sind. Diese Trockner arbeiten darüber hinaus in einem Temperaturbereich, für den nur kristallisiertes Gut zulässig ist, amorphes Gut würde klebrig werden und dadurch zusammenbacken.

Dies bedeutet, dass dem Trockenvorgang ein Kristallisiervorgang vorgeschaltet werden muss. Wird aber das zu bearbeitende Gut im Behälter durch das Werkzeug lange bearbeitet, dann besteht insbesondere bei kontinuierlichem Betrieb der Vorrichtung die Gefahr, dass einzelne Kunststoffteilchen schon sehr früh von der Austragsschnecke erfasst werden, andere Kunststoffteilchen jedoch erst sehr spät. Die früherfassten Kunststoffteilchen können noch verhältnismäßig kalt und daher nicht ausreichend vorbehandelt sein, wodurch Inhomogenitäten im durch die Schnecke dem angeschlossenen Werkzeug, z.B. einem Extruderkopf, zugeführten Material entstehen.

Um dies zu vermeiden und die Homogenität des ausgetragenen Materiales wesentlich zu verbessern, kann das erfindungsgemäße Verfahren in einer weiteren Vorrichtung geführt werden, bei der an die Einbringöffnung des Hauptbehälters die Ausbringöffnung zumindest eines weiteren Behälters angeschlossen ist, in welchem gleichfalls zumindest ein um eine vertikale Achse umlaufendes Werkzeug im Bodenbereich des Behälters vorgesehen ist. Es sind also zwei oder mehr Behälter in Serie angeordnet und das zu verarbeitende Kunststoffmaterial muss diese Behälter der Reihe nach durchlaufen. Im ersten Behälter wird bereits vorzerkleinertes, vorgewärmtes, vorgetrocknetes und vorverdichtetes und somit vorhomogenisiertes Material erzeugt, welches dem folgenden Behälter vorgelegt wird. Dadurch wird sichergestellt, dass kein unbehandeltes, d.h. kaltes, unverdichtetes, unzerkleinertes bzw. inhomogenes, Material direkt der Austragsschnecke und über diese dem angeschlossenen Extruder od. dgl. zugeht.

Hierbei werden diese Vorteile auch dann gewährt, wenn im zweiten und bzw. oder einem folgenden Behälter eine Vakuum- oder Schutzgasbehandlung des thermoplastischen Kunststoffgutes stattfindet. Der Überströmquerschnitt ist in der Regel gering und der Druckausgleich wird durch den Materialtransport stark gedrosselt. Zudem deckt die im vorgeschalteten Behälter gebildete Mischthrombe die Austragöffnung dieses Behälters ab und wirkt daher ebenfalls bis zu gewissem Grad dichtend.

Die Verhältnisse werden dann besonders günstig, wenn die Ausbringöffnung des weiteren Behälters, also des vorgeschalteten Behälters, zumindest annähernd auf der Höhe des Werkzeuges in diesem Behälter liegt, also im Bodenbereich des Behälters. Das in diesem Behälter umlaufende Werkzeug fördert dann durch Zentrifugalkraft in die Ausbringöffnung hinein, sodass der Überströmquerschnitt mit Material stets gut gefüllt ist.

Gemäß einer vorteilhaften Weiterbildung ist die Ausbringöffnung mit der Einbringöffnung mittels eines Rohrstutzens verbunden, in welchem ein Absperrorgan angeordnet ist. Dadurch lässt sich eine völlige Dichtung zwischen den beiden Behältern erzielen, sodass Vakuum- oder Schutzgasverluste völlig vermieden sind. Im einfachsten Fall kann dieses Absperrorgan erfindungsgemäß ein Schieber sein, welcher geschlossen wird, sobald die Vakuumbehandlung bzw. die Begasung im nachgeschalteten Behälter erfolgt. Dadurch wird allerdings kein völlig kontinuierlicher Betrieb mehr möglich. Ist jedoch gemäß einer bevorzugten Ausführungsform der Erfindung das Absperrorgan eine Schleuse, insbesondere eine Zellenradschleuse, so wird die erwähnte Dichtung zwischen den beiden Behältern aufrechterhalten und dennoch ein kontinuierlicher Betrieb möglich. Die Zellen der Schleuse können in an sich bekannter Weise ebenfalls begast oder evakuiert werden.

Das im nachgeschalteten Behälter gebildete Vakuum unterstützt die Einsaugung des zu bearbeitenden Gutes aus dem vorgeschalteten Behälter. Bei solchen Anlagen können daher in der Regel die Behälter auf gleicher Höhe angeordnet werden. Will man jedoch die Befüllung des nachgeschalteten Behälters durch Schwerkrafteinfluss verbessern, so kann gemäß einer Weiterbildung der Erfindung die Anordnung so getroffen sein, dass der in Fließrichtung des Gutes vorgeschaltete Behälter höher liegt als der folgende Behälter. Letzterer kann daher auch im Mittelbereich oder im oberen Bereich seiner Seitenwand und gegebenenfalls auch durch den Deckel von oben her beschickt werden.

Das erfindungsgemäße Verfahren kann, wie beschrieben, in vorteilhafter Weise in einer entsprechend dafür ausgestalteten Vorrichtung auch zweistufig geführt werden. Bei dieser Verfahrensführung erfolgt eine zweistufige Behandlung des anfallenden bzw. aufgegebenen Gutes, wobei im Zuge der Vorbehandlung in der Vorbehandlungseinrichtung keine Plastifizierung des Gutes, jedoch eine Kristallisierung und/oder eine gewisse Vorverdichtung bei gleichzeitiger Trocknung erfolgt. Die Vorverdichtung wird bei entsprechender Temperatur durch mechanische Beaufschlagung bzw. Energieeinbringung in das Gut bewirkt. Insbesondere erfolgt die Erhöhung bzw. Einstellung der Temperatur durch die mechanische Beaufschlagung des Gutes bzw. durch Umwandlung der Rotationsenergie zumindest eines Misch- und/oder Zerkleinerungselementes in thermische Energie aufgrund der auftretenden Reibungsverluste.

Im Zuge der Hauptbehandlung in der Hauptbehandlungseinrichtung wird das Gut bei erhöhter Temperatur weiter getrocknet, entgiftet und wenn nötig kristallisiert und unter hohem Vakuum für eine bestimmte mittlere Verweilzeit gehalten. Wiederum erfolgt eine mechanische Beaufschlagung bzw. Materialverdichtung und Einbringung von Energie mittels zumindest eines Misch- bzw. Zerkleinerungselementes, das aufgrund seiner Rotation die entsprechende thermische Energie in das Gut einbringt und dieses weiter erwärmt.

Die Hauptbehandlung, die unter Vakuum erfolgt, verringert die Restfeuchte auf einen vorgegebenen bestimmten mittleren Wert und bewirkt auch, dass flüchtige Schadstoffe aus dem Gut abgeschieden werden.

Die Temperatur bei der Hauptbehandlung wird unter der Schmelztemperatur des Gutes gehalten. Es ist jedoch anzustreben, diese Temperatur möglichst hoch anzusetzen.

Nach der Behandlung im einstufigen Verfahren bzw. der Hauptbehandlung im zweistufigen Verfahren erfolgt vorteilhafterweise eine Plastifizierung des abgeführten Gutes mittels eines vorzugsweise mittelbar an die Hauptbehandlungseinrichtung angeschlossenen Extruders. Aufgrund des direkten, vakuumdichten Anschlusses kann das Vakuum in der Hauptbehandlungseinrichtung in den Eingangsbereich des Extruders hineinwirken. Der Extruder weist oft eine Plastifizierzone auf, an die sich eine Kompressions- und Stauzone anschließt. An diese Stauzone schließt sich üblicherweise eine Entgasungs- bzw. Evakuierzone an, in welcher mit Vakuum, insbesondere Hochvakuum, flüchtige Substanzen aus der Schmelze abgesaugt werden. Es kann dabei eine ein- oder mehrstufige Entgasung vorgesehen werden; es können auch mehrere Kompressions- und Dekompressionszonen mit unterschiedlichem Vakuum aufeinanderfolgend angeordnet werden. Damit können auch hartnäckige bzw. schwer verdampfbare Kontaminationen ausgedampft werden.

Durch entsprechende Wahl der Temperaturen und der Verweilzeiten in der Vorbehandlung und in der Hauptbehandlung können der Viskositätswert der dem Extruder entnommenen Schmelze und des aus der Schmelze hergestellten Granulates eingestellt werden. Durch entsprechend lange Verweilzeiten und entsprechende hohe Temperaturen im Vakuum wird ein positiver Einfluss auf die Viskosität ausgeübt bzw. es erfolgt eine Repolymerisation.

Grundsätzlich ist es nicht nötig, die recyclierten, kristallisierten und getrockneten Kunststoff-Stücke aufzuschmelzen. Sie können auch unter Beibehaltung ihres getrockneten und kristallisierten Zustandes gelagert werden, abgekühlt werden oder über Transporteinrichtungen zu Extrusionssystemen oder anderen Umwandlungsprozessen weiter verarbeitet werden.

Da die Erreichung des kristallisierten Zustands mit den zur Zeit bekannten Systemen schwierig ist, kann auch auf die Beibehaltung des getrockneten Zustandes verzichtet werden, was üblicherweise bei direkter Verarbeitung ohne Neutrocknung zu Qualitätseinbußen führt. Wird das Material erneut getrocknet, führt das zum Verlust der bereits investierten Trocknungsenergie.

In den Druckschriften EP 123 771, EP 0 390 873, AT 396 900, AT 407 235, AT 407 970, AT 411 682, AT 411 235, AT 413 965, AT 413 673 oder AT 501 154 *sind geeignete Vorrichtungen* genau und spezifisch *beschrieben.*

Derartige Vorrichtungen werden auch in der Praxis eingesetzt und sind beispielsweise als "EREMA Kunststoff Recycling System PC" oder als "ein- oder zweistufige VACUREMA-Anlagen" bekannt.

Im folgenden werden einige Beispiele möglicher Verfahrensführungen beschrieben:

### Beispiel 1:

Polymilchsäure (PLA) in Form von Flakes aus zerkleinerten Gebinden oder Granulaten
- wird auf eine Temperatur von 65° bis 120°C, vorzugsweise 90° bis 110°C, erwärmt,
- verbleibt für eine mittlere Verweilzeit von 10 min bis 100 min, insbesondere von 20 min bis 70 min, im Reaktor,
- wobei die Umfangsgeschwindigkeit der äußersten Rührspitze des Zerkleinerungs- bzw. Mischwerkzeugs in einem Bereich von 1 bis 35 m/s, vorzugsweise 3 bis 20 m/s, liegt,
- und wobei ein Vakuum von ≤ 150 mbar, vorzugsweise ≤ 50 mbar, insbesondere ≤ 20 mbar, insbesondere zwischen 0,1 bis 2 mbar, angelegt wird.

### Beispiel 2:

Polymilchsäure (PLA) in Form von dünnen Folien, Fasern oder Vliesen,
- wird auf eine Temperatur von 65° bis 120°C, vorzugsweise 90° bis 110°C, erwärmt,
- verbleibt für eine mittlere Verweilzeit von 3 min bis 60 min, insbesondere von 10 min bis 25 min, im Reaktor,
- wobei die Umfangsgeschwindigkeit der äußersten Rührspitze des Zerkleinerungs- bzw. Mischwerkzeugs in einem Bereich von 15 bis 58 m/s, vorzugsweise 35 bis 47 m/s, liegt,
- und wobei die Behandlung unter Umgebungsdruck erfolgt.

## Patentansprüche

1. Verfahren zur Vorbehandlung und Aufbereitung von zu rezyklierendem Kunststoffmaterial in Form von Polymilchsäure (PLA), wobei das Kunststoffmaterial in Form von Granulaten, Flakes aus zerkleinerten Gebinden, Fasern. Vliesabfällen, zerkleinerten Folienabfällen mit einer Dicke zwischen 100 µm bis 2 mm, und/oder dünnen Folienabfällen aus Verstreckungsanlagen mit einer Dicke zwischen 5 µm bis 100 µm vorliegt, wobei das Kunststoffmaterial in zumindest einem Aufnahmebehälter bzw. Reaktor unter ständiger Mischung und gegebenenfalls Zerkleinerung bei einer Temperatur unterhalb der Schmelztemperatur des Kunststoffmaterials erwärmt und dabei kristallisiert, getrocknet und/oder gereinigt wird, wobei zur Mischung und Erwärmung des Kunststoffmaterials zumindest ein um eine Achse drehbares Misch- bzw. Zerkleinerungswerkzeug mit auf das Kunststoffmaterial mischend und/oder zerkleinernd einwirkenden Arbeitskanten eingesetzt wird, wobei die Erwärmung insbesondere durch Beaufschlagung mit mechanischer Energie erfolgt,
**dadurch gekennzeichnet, dass**
das Kunststoffmaterial aus Polymilchsäure (PLA) auf eine Temperatur von 65° bis 120°C. vorzugsweise 90° bis 110°C, erwärmt wird,
und dass das Kunststoffmaterial, wenn es in Form von dünnen Folien, Fasern oder Vliesen, insbesondere mit einer Dicke zwischen 100 µm bis 2 mm, vorliegt, bei einer Umfangsgeschwindigkeit der äußersten Rührspitze des Misch- bzw. Zerkleinerungswerkzeugs von 15 bis 58 m/s, vorzugsweise 35 bis 47 m/s, gemischt wird und für eine mittlere Verweilzeit von 3 min bis 60 min, insbesondere von 10 min bis 25 min, im Reaktor verbleibt und unter Umgebungsdruck behandelt wird,
und dass das Kunststoffmaterial, wenn es in Form von Flakes aus zerkleinerten Gebinden oder Granulaten vorliegt, bei einer Umfangsgeschwindigkeit der äußersten Rührspitze des Misch- bzw. Zerkleinerungswerkzeugs von 1 bis 35 m/s, vorzugsweise 3 bis 20 m/s, gemischt wird und für eine mittlere Verweilzeit von 10 min bis 100 min, insbesondere von 20 min bis 70 min, im Reaktor verbleibt und unter einem Vakuum von ≤ 150 mbar, vorzugsweise ≤ 50 mbar, insbesondere ≤ 20 mbar, insbesondere zwischen 0,1 bis 2 mbar, behandelt wird.

2. Verfahren nach Anspruch 1, **dadurch gekennzeichnet, dass** das Kunststoffmaterial auf eine Temperatur über der Glasübergangstemperatur erwärmt wird.

3. Verfahren nach Anspruch 1 oder 2, **dadurch gekennzeichnet, dass** das Misch- bzw. Zerkleinerungswerkzeug um eine vertikale Achse drehbar ist und gegebenenfalls auf mehreren übereinanderliegenden Ebenen angeordnet ist.

4. Verfahren nach einem der Ansprüche 1 bis 3, **dadurch gekennzeichnet, dass** das Verfahren mit oder ohne Vortrocknung und/oder mit oder ohne Vorkristallisation des Kunststoffmaterials durchgeführt wird.

5. Verfahren nach einem der Ansprüche 1 bis 4, **dadurch gekennzeichnet, dass** das Verfahren einstufig in einem einzigen Reaktor geführt wird bzw. dass das Kunststoffmaterial in einem einzigen Arbeitsgang, insbesondere in einem einzigen Reaktor, erwärmt, getrocknet, kristallisiert und gereinigt wird.

6. Verfahren nach einem der Ansprüche 1 bis 5 4, **dadurch gekennzeichnet, dass** das Verfahren mehrstufig, insbesondere zweistufig, geführt wird, wobei zwei oder mehr Aufnahmebehälter bzw. Reaktoren in Serie und/oder parallel angeordnet werden und das zu verarbeitende Kunststoffmaterial diese Behälter der Reihe nach durchläuft.

7. Verfahren nach Anspruch 6, **dadurch gekennzeichnet, dass** die Verfahrensbedingungen gemäß den Ansprüchen 1 bis 4, für zumindest einen, insbesondere für den zuerst beschickten Behälter bzw. für die Vorbehandlung, angewendet werden.

8. Verfahren nach einem der Ansprüche 6 oder 7, **dadurch gekennzeichnet, dass** das Kunststoffmaterial, insbesondere umfassend Polymere mit geringer Inertheit und/oder langer Diffusionszeit, in einer vorgelagerten Vorbehandlung auf eine Temperatur, insbesondere nahe der Prozesstemperatur der Hauptbehandlung, gebracht wird.

9. Verfahren nach einem der Ansprüche 6 bis 8, **dadurch gekennzeichnet, dass** das Kunststoffmaterial in der ersten Stufe einer Vorbehandlung, insbesondere unter Vakuumbedingungen, durch Beaufschlagung mit mechanischer Energie unterworfen und dadurch erwärmt und bei erhöhter Temperatur getrocknet und gegebenenfalls gleichzeitig kristallisiert wird, und dass anschließend in einer einem allfälligen Plastifizieren bzw. Aufschmelzen vorangehenden zweiten Stufe eine Hauptbehandlung des Kunststoffmaterials erfolgt, bei der das Kunststoffmaterial, insbesondere unter Vakuumbedingungen, erneut durch Beaufschlagung mit mechanischer Energie unter Bewegung getrocknet und weiter kristallisiert wird, wobei diese Hauptbehandlung insbesondere bei einer gegenüber der Vorbehandlung erhöhten Temperatur erfolgt.

10. Verfahren nach einem der Ansprüche 6 bis 9, **dadurch gekennzeichnet, dass** das Kunststoffmaterial vor der Vorbehandlung einer Vorzerkleinerung und/oder Waschung und/oder Vortrocknung unterworfen wird.

11. Verfahren nach einem der Ansprüche 6 bis 10, **dadurch gekennzeichnet, dass** die Temperatur der Hauptbehandlung unter der Plastifizierungstemperatur bzw. Schmelztemperatur des Kunststoffmaterials gehalten wird.

12. Verfahren nach einem der Ansprüche 6 bis 11, **dadurch gekennzeichnet, dass** das Kunststoffmaterial in kontinuierlichem Strom der Vorbehandlung unterzogen wird.

13. Verfahren nach einem der Ansprüche 1 bis 11, **dadurch gekennzeichnet, dass** das Verfahren kontinuierlich oder diskontinuierlich bzw. als Batch-Prozess geführt wird.

14. Verfahren nach einem der Ansprüche 1 bis 13, **dadurch gekennzeichnet, dass** das Kunststoffmaterial abschließend plastifiziert bzw. aufgeschmolzen und anschließend, gegebenenfalls nach einer Filterung, insbesondere unter Vakuumbedingungen, einem Extruder zugeführt wird bzw. zu Granulat verarbeitet wird.

## Claims

1. A process for pretreating and treating plastic material in the form of polylactic acid (PLA) to be recycled, said plastic material being available in the form of granules, flakes of crushed containers, fibers, fleece waste, crushed sheet waste having a thickness between 100 µm and 2 mm, and/or thin sheet waste from stretching facilities, having a thickness between 5 µm and 100 µm, said plastic material being heated and crystallized, dried, and/or purified in at least one receiving container or reactor under constant mixing, and optionally while being crushed, at a temperature below its melting temperature, wherein at least one mixing and/or crushing tool, which is rotatable about an axis and has processing edges which mix and/or crush the plastic material, is used for mixing and heating the plastic material, the plastic material being heated particularly by applying mechanical energy to it,
**characterized in that**
the plastic material of polylactic acid (PLA) is heated to a temperature of 65 to 120 °C, preferably of 90 to 110 °C,
and **in that** the plastic material, if present in the form of thin sheets, fibers, or fleece, particularly having a thickness between 100 µm and 2 mm, is mixed at a peripheral speed of the outmost tip of the mixing and/or crushing tool of 15 to 58 m/s, preferably of 35 to 47 m/s, and is retained in the reactor for an average retention time of 3 to 60 min, particularly of 10 to 25 min, and is treated under ambient pressure,
and **in that** plastic material, if available in the form of flakes of crushed containers or granules, is mixed at a peripheral speed of the outmost tip of the mixing and/or crushing tool of 1 to 35 m/s, preferably of 3 to 20 m/s, and is retained in the reactor for an average retention time of 10 to 100 min, particularly of 20 to 70 min, and is treated in a vacuum of ≤ 150 mbar, preferably of ≤ 50 mbar, particularly of ≤ 20 mbar, and particularly preferably of between 0.1 to 2 mbar.

2. The process according to claim 1, **characterized in that** the plastic material is heated to a temperature above its glass transition temperature.

3. The process according to claim 1 or 2, **characterized in that** the mixing and/or crushing tool is rotatable about a vertical axis and, optionally, **in that** it is disposed at several superimposed levels.

4. The process according to any one of the claims 1 to 3, **characterized in that** the process is carried out with or without preliminarily drying and/or with or without preliminarily crystallizing the plastic material.

5. The process according to any one of the claims 1 to 4, **characterized in that** the process is carried out in one step in a single reactor and **in that** the plastic material is heated, dried, crystallized, and purified in a single processing step, particularly in a single reactor.

6. The process according to any one of the claims 1 to 4, **characterized in that** the process is carried out in multiple steps, particularly in two steps, wherein two or more receiving containers or reactors are disposed in series and/or in parallel and the plastic material to be treated is passed through said sequence of containers.

7. The process according to claim 6, **characterized in that** the processing conditions according to any one of the claims 1 to 4 are applied particularly to the container which is charged first and/or to the pretreatment step.

8. The process according to claim 6 or claim 7, **characterized in that** the plastic material, particularly comprising polymers having low inertness and/or a long diffusion time, is heated to a temperature, particularly close to the processing temperature of the main treatment, in a pretreatment step.

9. The process according to any one of the claims 6 to 8, **characterized in that**, in a first pretreatment step, particularly under vacuum conditions, the plastic material is mechanically energized and thus heated and dried at elevated temperatures and, optionally, crystallized at the same time, and **in that**, in a subsequent second step, which is optionally followed by plastification and melting, a main treatment of the plastic material is carried out, particularly under vacuum conditions, wherein the plastic material is dried and further crystallized by mechanically energizing it again while moving it, said main treatment being particularly carried out at a higher temperature than in the pretreatment.

10. The process according to any one of the claims 6 to 9, **characterized in that**, prior to the pretreatment, the plastic material is preliminarily crushed and/or washed and/or preliminarily dried.

11. The process according to any one of the claims 6 to 10, **characterized in that** the temperature of the main treatment is kept below the plastification temperature or the melting temperature of the plastic material.

12. The process according to any one of the claims 6 to 11, **characterized in that** the pretreatment of the plastic material is carried out in a continuous stream thereof.

13. The process according to any one of the claims 1 to 11, **characterized in that** the process is carried out continuously or discontinuously or as a batch process.

14. The process according to any one of the claims 1 to 13, **characterized in that** the plastic material is finally plastified or melted and is then supplied to an extruder or processed to obtain granules, optionally after having been filtered, particularly under vacuum conditions.

## Revendications

1. Procédé de prétraitement et de traitement de matière synthétique sous forme d'acide polylactique (PLA) à recycler, ladite matière synthétique étant disponible sous forme de granules, flocons d'emballages broyés, fibres, déchets de polaires, déchets de feuilles broyés d'une épaisseur entre 100 µm et 2 mm, et/ou de déchets de feuilles minces d'installation d'étirage d'une épaisseur entre 5 µm et 100 µm, ladite matière, synthétique étant réchauffée et cristallisée, séchée et/ou purifiée dans au moins un récipient ou réacteur en étant constamment mélangée et, le cas échéant, broyée à une température inférieure à sa température de fusion, au moins un outil mélangeur et/ou broyeur, tournant autour un axe et ayant des bords de traitement qui mélangent et/ou broient la matière synthétique, étant utilisé pour mélanger et réchauffer la matière synthétique, ladite matière synthétique étant réchauffée par l'application d'énergie mécanique,
**caractérisé en ce que**
ladite matière plastique en acide polylactique (PLA) est réchauffée à une température de 65 à 120 °C, de préférence de 90 à 110 °C,
et **en ce que** ladite matière plastique, si elle est disponible sous forme de feuilles minces, fibres, ou polaire, notamment d'une épaisseur entre 100 µm et 2 mm, est mélangée à une vitesse périphérique de l'extrême pointe de l'outil mélangeur et/ou broyeur de 15 à 58 m/s, de préférence de 35 à 47 m/s, et est retenue dans le réacteur pour une durée de séjour moyenne de 3 à 60 min, notamment de 10 à 25 min, et est traitée sous pression ambiante,
et **en ce que** la matière synthétique, si elle est disponible sous forme de flocons d'emballages broyés ou de granules, est mélangée à une vitesse périphérique de l'extrême pointe de l'outil mélangeur et/ou broyeur de 1 à 35 m/s, de préférence de 3 à 20 m/s, et est retenue dans le réacteur pour une durée de séjour moyenne de 10 à 100 min, notamment de 20 à 70 min, et est traitée sous un vide de ≤ 150 mbar, de préférence de ≤ 50 mbar, particulièrement de ≤ 20 mbar, et de manière particulièrement préférée de 0,1 à 2 mbar.

2. Procédé selon la revendication 1, **caractérisé en ce que** la matière synthétique est réchauffé à une température supérieure à sa température de transition vitreuse.

3. Procédé selon la revendication 1 ou 2, **caractérisé en ce que** l'outil mélangeur et/ou broyeur peut tourner autour un axe vertical et, le cas échéant, est aménagé à plusieurs niveaux superposés.

4. Procédé selon l'une des revendications 1 à 3, **caractérisé en ce que** le procédé est effectué avec ou sans réchauffage préliminaire et/ou avec ou sans cristallisation préliminaire de la matière synthétique.

5. Procédé selon l'une des revendications 1 à 4, **caractérisé en ce que** le procédé est effectué en une seule étape dans un seul réacteur et **en ce que** la matière synthétique est réchauffée, séchée, cristallisée et purifiée dans une seule étape de traitement, notamment dans un seul réacteur.

6. Procédé selon l'une des revendications 1 à 4, **caractérisé en ce que** le procédé est effectué en plusieurs étapes, notamment en deux étapes, deux ou plusieurs récipients ou réacteurs étant aménagés en série et/ou parallèlement et la matière synthétique à traiter parcourant ces récipients l'un après l'autre.

7. Procédé selon la revendication 6, **caractérisé en ce que** les conditions de traitement selon l'une des revendications 1 à 4 s'appliquent notamment au récipient qui est le premier à être chargé ou à l'étape de prétraitement.

8. Procédé selon la revendication 6 ou 7, **caractérisé en ce que**, pendant une étape de prétraitement, la matière synthétique, qui notamment comprend des polymères d'une inertie faible et/ou d'une durée de diffusion longue, est réchauffée à une température, particulièrement près de la température de traitement du traitement principal.

9. Procédé selon l'une des revendications 6 à 8, **caractérisé en ce que**, pendant une première étape de prétraitement, une énergie mécanique est appliquée à la matière synthétique qui est ainsi réchauffée, notamment sous des conditions de vide, et séchée à des températures élevées et, le cas échéant, cristallisée au même temps, et **en ce que**, pendant une deuxième étape ultérieure, avant la plastification et la fusion facultative de la matière synthétique, un traitement principal de la matière synthétique est effectué, encore une fois sous l'application d'énergie mécanique, séchant et cristallisant la matière synthétique pendant qu'elle est agitée, ledit traitement principal étant notamment effectué à une température supérieure à celle du prétraitement.

10. Procédé selon l'une des revendications 6 à 9, **caractérisé en ce que** la matière synthétique est préalablement broyée et/ou nettoyée et/ou préalablement séchée avant le prétraitement.

11. Procédé selon l'une des revendications 6 à 10, **caractérisé en ce que** la température du traitement principal est maintenu inférieure à la température de plastification ou à la température de fusion de la matière synthétique.

12. Procédé selon l'une des revendications 6 à 11, **caractérisé en ce que** le prétraitement de la matière synthétique est un procédé continu.

13. Procédé selon l'une des revendications 1 à 11, **caractérisé en ce que** le procédé est un procédé continu ou un procédé discontinu/par lots.

14. Procédé selon l'une des revendications 1 à 13, **caractérisé en ce que** la matière synthétique est finalement plastifiée ou fondue et, puis, fournie à une extrudeuse ou traitée pour obtenir des granules, le cas échéant après avoir être filtrée et notamment sous des conditions de vide.
